# EUROPEAN PATENT APPLICATION

(11) **EP 0 587 244 A1**
(43) Date of publication of application: **16.03.1994**
(21) Application number: 93202585.1
(22) Date of filing: 03.09.1993
(51) Int. Cl.: E04H 6/14, B65G 1/127

(54) **System for parking vehicles or storing products**

(30) Priority: 11.09.1992 ES 9201836
(71) Applicant: Pina Fraj, Placido, E-44002 Teruel (ES)
(72) Inventor: Pina Fraj, Placido, E-44002 Teruel (ES)
(74) Representative: Ungria Lopez, Javier

(57) **Abstract**

System for parking vehicles or storing products (1), basically comprised of two pairs of supports (2) and (3), between which there is a pair of shafts (4) and (5) provided with two aligned sprockets (11) and (12) between which remain respective chains (7) and (6), the cited chains (7,6) being provided with some pairs of L-shaped strips (8) to which some rigid tension pieces (9) linked with the platforms (10) for placement of the products are joined in a rotating manner.

## Description

As is expressed in the title of the present specification, the following invention consists of a system for parking vehicles or storing products, in such a way that in the event of parking vehicles or storing heavy products the same is basically comprised of a series of platforms joined in a rotating manner to a pair of chains geared between respective sprockets linked to corresponding shafts, one of said shafts being the driving shaft to which a motor transmits it movement.

The shafts to which the sprockets in which the chains are locked are linked, remain mounted preferably on a vertical structure and the number of platforms for placement of the vehicles will depend on the distance of separation between the shafts, this chain pump type structure permitting maximum use of the space in relation with the number of parked vehicles.

Some L-shaped strips are fastened to the pair of chains by whose free end the platforms for placement of the cars by means of some rigid tension pieces are joined in a rotating manner.

In the event the system is made to store products weighing considerably less than vehicles, the same can formed by including a sole chain reducing the cost of the same and adapting it to the measurements of the desired product, thus serving for example as a product display, such as for computers, typewriters, fax machines, photocopying machines and others.

### BACKGROUND OF THE INVENTION

Everyone is familiar with the fact that it is more and more difficult to park in all cities, since conventinally when a vehicle is used, one parks on the street or in underground parking lots. Thus, parking on the street is very difficult due to the limited free parking spaces in relation with the large number of vehicles.

Likewise, the problem of parking lots is not solved with public underground parking lots mainly due to their scarcity and high cost due to the value of the ground, this problem being more acute in the urban centers of large cities, where the crowding of vehicles is larger and the available space minimal, therefore the cost thereof is much higher, for making as well as maintaining the same, which affects the cost for the user.

In the case of other products, the display of the same must be done counting on a large space for placement thereof, which increases the cost of the installation and prevents having a large diversity of models since if they are heavy they cannot be stored at different heights due to the inconveniences that handling of the same represents for presenting the desired product to the user or client.

### DESCRIPTION OF THE INVENTION

A system for parking vehicles, which is based on a chain pump type structure, provided with a series of platforms upon which the different vehicles will be located is described in the present specification.

Thus, the structure is formed by two pairs of supports between which remain two shafts each one of which is provided with a pair of sprockets aligned with each other, between which respective chains are geared to which some L-shaped tension pieces are linked, which will support the platforms for placement of the cars.

The rotating connection of the platforms to the L-shaped tension pieces makes said platforms always be in a horizontal position.

In the rotation of the chains, the bottom platform remains level with the ground, thus permitting placement of the corresponding vehicle, in such a way that with the preset rotation of said chains a second chain will be positioned level with the ground ready for placement of another vehicle and so on until all the platforms are completed if necessary.

The rotation of the chains is determined by a motor that transmits movement to the driving shaft, so that the pair of chains are provided with the corresponding tension mechanism of the same.

This parking system permits parking of a larger number of vehicles in a smaller space, so that when the distance between the spin shafts is greater, this is when the height of the structure will be greater, the larger the number of platforms will be and therefore the number of vehicles to be parked.

In order to facilitate the recovery of the desired vehicle upon the corresponding platform being positioned below, the system will be provided with a microprocessor so that upon the platforms being numbered by simply designating the order number it will be positioned adequately in the ideal place, this is in the bottom part.

In the variation of embodiment in which the system includes a single chain, with the corresponding platform for placement of the product weighing considerably less than a vehicle, the motor can be deleted effecting the rotation by hand by means of a lever that will include the driving shaft, facilitating the positioning of the product in the place desired by the user, for easier handling thereof.

In order to complete the description that is going to be made hereinafter and for the purpose of providing a better understanding of the features thereof, a set of drawings in whose figures the most significant details of the invention are represented in an illustrative and non-restrictive manner, are attached hereto.

### BRIEF DESCRIPTION OF THE DRAWINGS

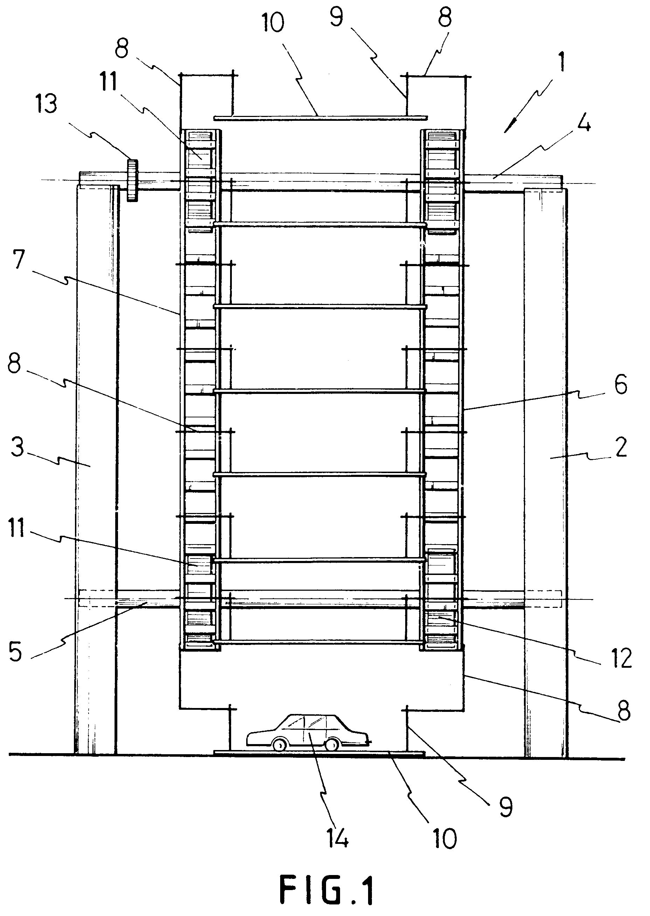

Figure 1.- It is a raised front view of the chain pump type structure, forming the parking area upon positioning the different vehicles on the platforms of the same, observing the pair of rotating chains between the respective sprockets linked with the corresponding spin shaft.

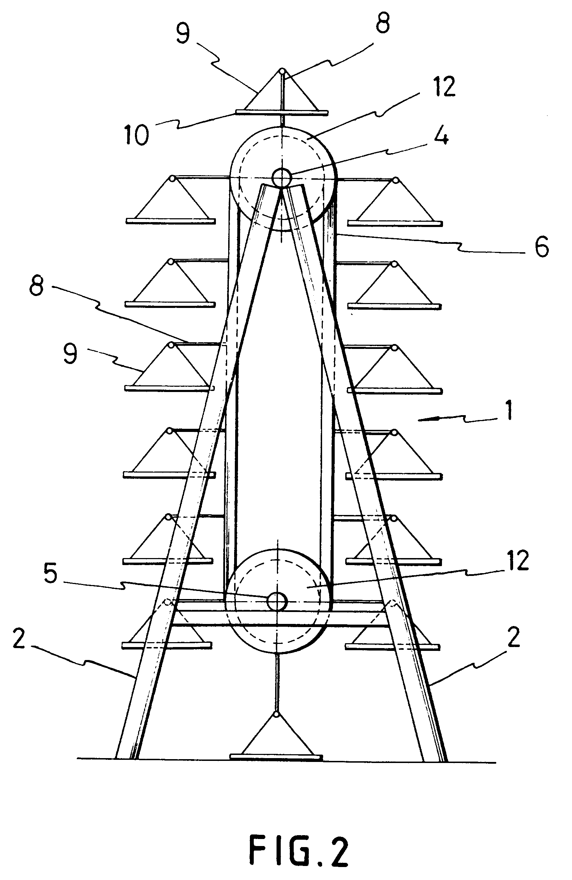

Figure 2.- It shows a raised side view of the chain pump type structure forming the parking area, observing the different platforms on which the vehicles to be parked are positioned.

### DESCRIPTION OF A PREFERRED EMBODIMENT

In view of the commented figures and in accordance with the numbering used, we can see how the system for parking vehicles or storing products that is described in the present specification, is formed by a chain pump type structure (1), comprised of two pairs of supports (2) and (3), between which the shafts (4) and (5) provided with a pair of aligned sprockets (11) and (12) are positioned, between which respective chains (7) and (6) are geared.

Pairs of L-shaped strips (8) are fastened to chains (6) and (7), to which some tension pieces (9) linked to the platforms (10) for placement of the cars (14) are joined in a rotating manner, so that upon said chains (6) and (7) turning the platforms (10) remain in a horizontal position.

Upon the driving shaft (4) to which movement is transmitted by the corresponding motor by means of gearing (13) turning, the different platforms (10) in their bottom part remain positioned level with the ground, permitting placement of the corresponding vehicle.

Thus, the described parking system permits perfect optimization of the space in relation to the number of vehicles parked.

The system includes a microprocessor that permits the recevery of any vehicle very rapidly, upon being able to control placement of all of them upon the platforms being numbered.

In the case of the variant of the described mechanism, useful in other types of industries, for storage of products that weigh considerably less, the same may be made by including a single chain to which the rotating connection strips of the platforms or deposits for placement of the products will be fastened.

In this case, upon normally being light products of a small volume, the motor can be replaced by a lever fastened to the driving shaft in order to facilitate the gathering positioning of the desired products.

Thus, this mechanism can be useful to display different products thus reducing the space taken up since normally in the position of different types of models of products the space taken up is very large, therefore, there is no optimization of the space in relation with the displayed products.

Besides, the product is displayed to the user or buyer in a easy way since upon turning the chain the desired product remains perfectly displayed before the user to facilitate all the indications that can be given to him about the same.

## Claims

1. System for parking vehicles or storing products, essentially characterized in being comprised of a chain pump type structure (1), formed by two pairs of supports (2) and (3), between which remain a pair of shafts (4) and (5) provided with two sprockets (11) and (12), aligned to each other, in which respective chains (7) and (6) gear, it being provided for that to said chains pairs of L-shaped strips (8) are linked to whose free end some rigid tension pieces (9) are joined in a rotating manner linked to the platforms (10) for placement of the vehicles (14), with the particularity that movement is transmitted to the driving shaft (4) by means of a motor through gearing (13.)

2. System for parking vehicles or storing products, according to claim 1, characterized in that the system includes a single chain to which the L-shaped strips carrying the platforms for displaying light products are fastened, with the particularity that the motor can be replaced by a lever linked to the driving shaft for manual operation thereof.
